# EUROPÄISCHE PATENTANMELDUNG

(11) **EP 0 715 998 A1**
(43) Veröffentlichungstag der Anmeldung: **12.06.1996**
(21) Anmeldenummer: 94119229.6
(22) Anmeldetag: 06.12.1994
(51) Int. Cl.: B60R 25/00

(54) **Diebstahlsicherung**

(71) Anmelder: Barke, Stefan, D-01217 Dresden (DE); Schmidt, Peter, D-09366 Stollberg (DE); Kehl, Johann, D-04720 Döbeln (DE); Wellhöner, Egon, D-46499 Hamminkeln 4 (DE)
(72) Erfinder: Barke, Stefan, D-01217 Dresden (DE); Schmidt, Peter, D-09366 Stollberg (DE)
(74) Vertreter: Kailuweit, Frank, Dr. Dipl.-Ing.

(57) **Zusammenfassung**

Der Schutz von Fahrzeugen, insbesondere Kraftfahrzeugen, vor Diebstahl oder unbefugter Benutzung, wird durch eine Blockierung funktionswichtiger Baugruppen oder deren zielgerichtete Zerstörung bewirkt.

Die Diebstahlsicherung besteht aus einer Codeleseeinrichtung mit Codeschlüssel (2) zur Freigabe des Betriebes, aus mindestens einem Wirkmodul (3), das jeweils einen Speicher zur Speicherung eines Codes und eine Vergleichseinrichtung zum Vergleich des vom Codeschlüssel (2) gelesenen Codes mit dem gespeicherten Code aufweist. Jedes Wirkmodul (3) ist einer zu schützenden Baugruppe des Fahrzeuges zugeordnet.

Bei fehlender Übereinstimmung der Codes bewirkt das Wirkmodul (3) eine Blockierung der Funktion oder eine Zerstörung der betreffenden Baugruppe.
Das Wirkmodul (3) ist mit der zugeordneten Baugruppe in einer von außen unzugänglichen Weise zusammengeschlossen, so daß ein Zugriff auf das Wirkmodul (3) von außen nur unter Zerstörung der Baugruppe erfolgen kann.

## Beschreibung

Die Erfindung betrifft eine Diebstahlsicherung zum Schutz von Fahrzeugen nach dem Oberbegriff des Patentanspruches 1.

Eine derartige Diebstahlsicherung ist aus der DE 33 38 608 C1 bekannt.

Diese und andere bekannte Sicherheitseinrichtungen basieren auf dem Grundprinzip, die Benutzung eines Gegenstandes oder den Zutritt zu einem Objekt durch einbruchshemmende Mittel zu erschweren.
So sind Lösungen bekannt, bei denen durch redundante Anordnung gleicher oder verschiedenartiger, mechanisch oder elektrisch wirkender Schließsysteme ein Zutritt nur durch berechtigte Personen ermöglicht wird, die im Besitz aller notwendigen Sicherheitsschlüssel sind.

Daneben sind Lösungen bekannt, bei denen die Funktionen des Schlüssels und der Schließeinrichtung durch eine Codekarte und einen entsprechenden Codekartenleser übernommen werden. Zur Sicherung des zu schützenden Objektes bei Verlust einer derartigen Codekarte sind auf ihr in der Regel codierte Informationen enthalten, die die Benutzung nur einem Berechtigten ermöglichen, der beispielsweise den Inhalt einer geheimgehaltenen Codeziffernfolge kennt.

Diese Lösungen bieten nur einen begrenzten Schutz.
Mechanische Schließsysteme weisen aus konstruktiven Gründen in der Regel Schwachstellen auf, die insbesondere von professionell agierenden Dieben sehr schnell erkannt und für das gewaltsame Eindringen in das betreffende Objekt genutzt werden. Aus diesem Grunde bietet auch die Möglichkeit einer mehrfachen, redundanten Anordnung verschiedenartiger Schließsysteme keinen absoluten Schutz, da das Eindringen in das Objekt bestenfalls erschwert, nicht aber verhindert werden kann. So ist beispielsweise eine Dreifachverriegelung an Wohnungstüren oder Türen eines PKW's technisch fragwürdig, wenn zugleich ein leichteres Eindringen durch das gewaltsame Zerstören der Fensterverglasung nicht verhindert werden kann.

Alle bisher bekannten Lösungen gehen von dem Grundsatz aus, die konstruktiv vorgegebenen Zutrittsmöglichkeiten (Türen, Fenster, Klappen) sicherer zu gestalten und durch eine größere Zahl zuverlässigerer Einzelsicherungen zu schützen.

Aufgabe der Erfindung ist es, den Schutz von Fahrzeugen dadurch zu realisieren, daß bei einem Diebstahl oder bei unbefugter Benutzung eine Blockierung von Funktionen oder eine Zerstörung von Baugruppen erfolgt.

Die erfindungsgemäße Aufgabe wird durch die Merkmale des kennzeichnenden Teiles des Anspruchs 1 gelöst.
Vorzugsweise Weiterbildungen der Erfindung sind in Unteransprüchen wiedergegeben.

Die Diebstahlsicherung besteht in der einfachsten Form aus einer Eingabeeinheit (1), einem Codeschlüssel (2) und mindestens einem Wirkmodul (3), wobei die Eingabeeinheit (1) einen Codeleser (1.1.), einen Schalter (S1) für die Spannungsversorgung der Wirkmodule (3) und eine Rückmeldeeinheit (1.2.) umfaßt. Die Rückmeldeeinheit (1.2.) besteht aus einem Adressendecodierer (1.2.1.), einer Prüfeinheit (1.2.2.) für die vergleichende Prüfung der Ist-Zustände (aktiviert/deaktiviert) aller am zu sichernden Objekt eingesetzten Wirkmodule (3) und einem Schalter (S3) für die Spannungsversorgung.

Der Schalter (S1) wird beim Einführen des Codeschlüssels (2) in den Codeleser (1.1.) geschlossen. In dieser Schalterstellung werden alle Wirkmodule (3) mit Spannung versorgt. Zugleich werden beim Einführen des Codeschlüssels (2) in den Codeleser (1.1.) die im oder auf dem Codeschlüssel (2) gespeicherten, codierten Informationen gelesen und an alle Wirkmodule (3) weitergeleitet, die sich in oder an Baugruppen des zu sichernden Objektes befinden oder auf sie wirken.

Das Wirkmodul (3) besteht aus einem Logikteil und einem Stellteil, wobei der Logikteil mindestens eine Richtungssperrschaltung (3.1.1.), eine Vergleichseinheit (3.2.), einen Codevorspeicher (3.3.), einen Codespeicher (3.4.) und ein Zeitglied (3.5.) aufweist.
Das Stellteil besteht aus einem Schaltverstärker (3.6.) und einer Wirkbaugruppe (3a) ... (3e), welche direkt oder mittelbar auf eine Baugruppe des zu sichernden Objektes wirkt und im aktivierten Zustand des Wirkmoduls (3) die Funktion dieser Baugruppe blockiert oder bei unbefugter Benutzung die Zerstörung dieser Baugruppe auslöst.
Die vom Codeschlüssel (2) durch den Codeleser (1.1.) abgenommenen, codierten Informationen werden in der Vergleichseinheit (3.2.) des Logikteils abgelegt und mit den im Codespeicher (3.4.) des Wirkmoduls (3) gespeicherten Informationen verglichen. Bei Übereinstimmung der vom Codeschlüssel (2) eingelesenen Informationen mit den im Codespeicher (3.4.) des Wirkmoduls (3) gespeicherten Informationen wird das Wirkmodul (3) deaktiviert, indem der Schaltbefehl "DEAKTIVIEREN" über den Schaltverstärker (3.6) an die Wirkbaugruppe (3a) ... (3e) geleitet wird, und die Wirkbaugruppe (3a) ... (3e) vom Zustand "AKTIVIERT" in den Zustand "DEAKTIVIERT" wechselt. Bei fehlender Übereinstimmung der vom Codeschlüssel (2) eingelesenen Informationen mit den im Codespeicher (3.4.) des Wirkmoduls (3) gespeicherten Informationen wird von der Vergleichseinheit (3.2.) ein Schaltbefehl an das Zeitglied (3.5.) geleitet, durch welches mit einer zeitlichen Verzögerung der Schaltbefehl "AKTIVIEREN" über den Schaltverstärker (3.6.) an die Wirkbaugruppe (3a) ... (3e) geleitet wird und die Wirkbaugruppe (3a) ... (3e) im Zustand "AKTIVIERT" verbleibt.

Im Gegensatz zu allen bisher bekannten Diebstahlsicherungen verhindert das Wirkmodul (3) durch seine Anordnung, seine Konstruktion und Wirkungsweise ein Training professionell und organisiert agierender Diebe. Nur in den Wirkmodulen (3) ist der geheime Sicherheitscode gespeichert, der durch eine oder mehrere Sperrschaltungen (3.1.1.); (3.1.2.) im Wirkmodul (3) vor Abfragen von außen geschützt ist.

Die Diebstahlsicherung wird durch Einführen des Codeschlüssels (2) in den Codeleser (1.1.) der Eingabeeinheit (1) angesprochen. Die Eingabeeinheit (1) ist logisch verknüpft mit mindestens einem Wirkmodul (3), das sich in oder an einer Baugruppe des zu sichernden Objektes befindet. Um eine Manipulation an dem Wirkmodul (3) zu verhindern oder weitestgehend zu erschweren, ist das Wirkmodul (3) fest oder schwer lösbar mit dem zu sichernden Objekt verbunden (z. B. innerhalb verpreßter, vernieteter oder verschweißter Baugruppengehäuse oder durch Verschraubung mit von außen verdeckten Teilen, wie der Türfalz, dem Mittelholm der Karosserie etc.).

Die Eingabeeinheit (1) übernimmt mehrere Funktionen:
Zum einen liest sie den im Codeschlüssel (2) gespeicherten Code und gibt ihn an alle Wirkmodule (3) weiter.
Zum zweiten wird mit der Eingabeeinheit (1) in einer alternativen Lösung der Codeschlüssel (2) bedarfsweise neu überschrieben, das heißt, der alte Code wird gelöscht und durch einen neuen Code ersetzt. Dabei wird durch einen entsprechenden Befehl zugleich der alte Code in allen Wirkmodulen (3) gelöscht. Eine Neucodierung ist nur möglich, wenn sich der Codeschlüssel (2) in der Eingabeeinheit (1) befindet. Die Eingabe des neuen Codes erfolgt über eine am zu sichernden Objekt angeordnete oder abnehmbare Tasteneingabe (4).

Der Codeschlüssel (2) ist notwendige Voraussetzung für den Zutritt zu dem zu sichernden Objekt oder zu seiner berechtigten Inbetriebnahme.

Der Codeschlüssel (2) hat die Funktion eines dualen Codespeichers und ist in einer vorzugsweisen Ausführungsform als kartenförmiger Datenträger mit darauf angeordneten Magnetstreifensystemen ausgeführt. Damit ist die einfache Möglichkeit gegeben, eine aus vier bis sechs Ziffern bestehende Zahlenkombination digital darzustellen.

In einer bevorzugten Ausführungsform ermöglicht der Codeschlüssel (2) bei einem Fahrzeug gleichzeitig das Öffnen und Verschließen der Fahrzeugtüren und des Tankverschlusses, indem an einzelnen Türen, Klappen oder Hauben durch einen darin angeordneten Codeleser beim Einführen des Codeschlüssels (2) sein Inhalt gelesen, verglichen und nachfolgend über einen Schaltverstärker Servomotoren angesteuert werden, die die Verriegelung der gesicherten Türen, Klappen oder Hauben aufheben.

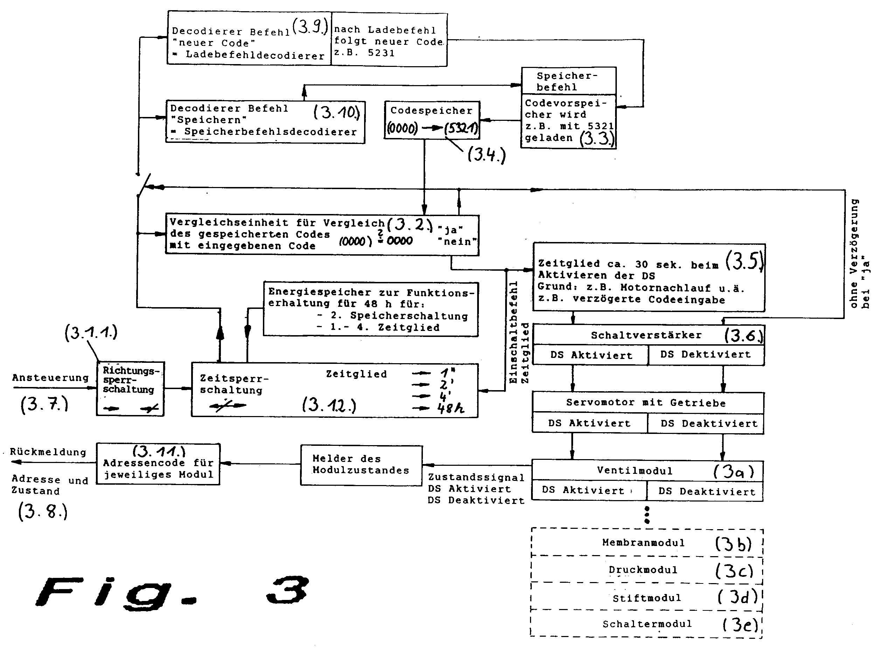

Ein Wirkmodul (3), dessen struktureller Aufbau in Figur 3 dargestellt ist, weist mindestens eine Richtungssperrschaltung (3.1.1.) auf. In einer bevorzugten Ausführungsform sind zwei aufeinanderfolgende Sperrschaltungen (3.1.1.); (3.1.2.) vorgesehen:
Über die Ansteuerungsleitung (3.7.) kommt das Codesignal in die erste Sperrschaltung (Richtungssperreinheit) (3.1.1.). Durch die Schaltung wird realisiert, daß Signale nur in den Codespeicher (3.4.) des Wirkmoduls (3) eingelesen, nicht aber ausgegeben werden. Damit wird verhindert, daß der Codespeicher (3.4.) des Wirkmoduls (3) von außen lesbar ist.

Die zweite Sperrschaltung (3.1.2.) ist eine Zeitsperreinheit, die aus vier Zeitgliedern gebildet wird. Diese Zeitglieder sperren die Eingabeeinheit (1) nach einem fehlerhaften Bedienungsvorgang (falscher Codeschlüssel, falscher Eingabecode) gegenüber einem weiteren Versuch, Codeinformationen mittels Codeschlüssel (2) oder über die Tasteneingabe (4) einzulesen.
Die Zeitsperreinheit (3.1.2.) bewirkt, daß ein weiterer Codelesevorgang zunächst nach einer Minute, anschließend nach zwei und vier Minuten und nach dem dritten Fehlversuch erst nach weiteren 48 Stunden vorgenommen werden kann.

Nach der zweiten Sperrschaltung (3.1.2.) gelangt das Codesignal in die Vergleichseinheit (3.2.), die das Signal mit dem Code im Codespeicher (3.4.) vergleicht. Bei Übereinstimmung wird über den Schaltverstärker (3.6.) die Wirkbaugruppe (3a) ... (3e), z. B. über einen Servomotor mit Getriebe angesteuert und dadurch das Wirkmodul (3) deaktiviert.

Ist der Zustand "DEAKTIVIERT" erreicht, gibt das Wirkmodul (3) über die Rückmeldeleitung (3.8.) mit einem Adressencode (3.11.) des jeweiligen Wirkmoduls (3) den Zustand "DEAKTIVIERT" an die Eingabeeinheit (1) weiter.

Stimmen Codesignal und Code im Codespeicher (3.4.) des Wirkmoduls (3) nicht überein, wird über ein gesondertes Zeitglied (3.5.) nach ca. 30 Sekunden über den Schaltverstärker (3.6.) die Wirkbaugruppe (3a) ... (3e) angesteuert und die Diebstahlsicherung aktiviert. Dadurch werden ungewollte Schäden am zu sichernden Objekt, z. B. durch Nachlauf eines Ottomotors bei Fehlzündungen, vermieden.

Als Antriebseinheiten für die Wirkbaugruppen (3a) ... (3e) der Wirkmodule (3) finden vorzugsweise Servomotoren, Magnetschalter oder andere, translatorisch oder rotatorisch wirkende Antriebseinheiten Verwendung.
Die Wirkmodule (3) sind vorzugsweise innerhalb der Bau-gruppen- oder Aggregategehäuse untergebracht, so daß eine Manipulation oder eine unbefugte Benutzung oder ein Diebstahl nur möglich wird, wenn alle Baugruppen und Aggregate, die durch die Wirkmodule (3) gesichert sind, lokalisiert, demontiert und/oder durch neue Baugruppen und Aggregate ersetzt werden. Dadurch ist ein Diebstahl bereits aus wirtschaftlichen Gründen unrentabel.

Auch eine elektronische oder elektrische Manipulation der Wirkmodule (3) mit Spannungspitzen, Stromstößen oder mittels modulierter Signale wird durch die im Wirkmodul (3) enthaltene Richtungssperrschaltung (3.1.1.) (Richtungssperreinheit) verhindert, so daß keine Informationen aus dem Wirkmodul (3) nach außen gelangen.
Alle anderen Baugruppen der Diebstahlsicherung enthalten keinen Code, der abgefragt werden könnte und sind daher gegen Manipulationen resistent.

Professionelle Versuche, das zu schützende Objekt durch Manipulationen nutzbar zu machen, haben zwangsläufig die Zerstörung aller mit Wirkmodulen (3) ausgerüsteten Baugruppen zur Folge. Dadurch würde ein Austausch aller betreffenden Baugruppen notwendig, so daß ein organisierter Diebstahl ökonomisch unrentabel wird.
Dies wird u. a. dadurch erreicht, daß die Wirkmodule unlösbar mit Baugruppen oder Baugruppengehäusen des zu sichernden Objektes verbunden sind (z. B. verpreßt, verschweißt, vergossen, verklebt usw.). Die zielgerichtete Entfernung der Wirkmodule (3) bewirkt damit die Zerstörung der Baugruppen.
Als Wirkmodule (3) sind verschiedene Modulgrundtypen vorgesehen. So ermöglicht das Ventilmodul (3a) das Öffnen oder Schließen einer funktionswichtigen Durchlaßöffnung am zu sichernden Objekt durch ein mechanisch, pneumatisch, hydraulisch oder elektrisch betätigtes Ventil.
Das Ventilmodul mit Sollbruchmembran (3b) bewirkt die Zerstörung einer Sollbruchstelle durch gezielte Überlastung. Eine weitere Wirkmodulform stellt das Ventilmodul mit Sollbruchmembran und Öffnungsmembran (Druckmodul (3c)) dar. Dabei befinden sich in einem gesonderten Druckbehälter Spezialflüssigkeiten, die mittels einer Öffnungsmembran über einen Auslaßkanal in einen funktionswichtigen Bereich des zu sichernden Objektes gelangen und die Zerstörung der betreffenden Baugruppe bewirken.

Das Stiftmodul (3d) weist einen Elektromagneten oder einen Servomotor auf, der ein stiftförmiges Element translatorisch bewegt.
Das Schaltermodul (3e) umfaßt eine elektromechanische Einrichtung, dessen Antrieb das Öffnen oder Schließen eines elektrischen Kontaktes bewirkt. In der einfachsten Form ist das Wirkmodul (3) als Magnetschalter ausgeführt.

Die Anzahl und die Verwendung der Wirkmodule (3) am zu sichernden Objekt ist in jedem Anwendungsfall frei wählbar. Damit kann in Abhängigkeit vom Wert des Objektes auch der materielle und finanzielle Aufwand für die Objektsicherung in adäquater Form angepaßt werden.
Ebenso ist die Möglichkeit vorgesehen, durch die Anordnung fiktiver Module oder Steuerungsleitungen potentielle Diebe zu irritieren. Daneben ist durch die vorzugsweise verdeckte Anordnung der Wirkmodule (3) innerhalb der Baugruppen die konkrete Lage des einzelnen Wirkmoduls (3) ohnehin nicht augenscheinlich.

Grundsätzlich werden im Falle eines Diebstahls durch die Wirkmodule (3) alle damit ausgerüsteten Baugruppen am zu sichernden Objekt blockiert und die normale Wirkungsweise der betreffenden Baugruppe unterbunden. Diese erste Schutzstufe der Diebstahlsicherung sichert das zu schützende Objekt vor laienhaften Versuchen der unbefugten Benutzung.
Professionelle Manipulationen am zu sichernden Objekt (z. B. Versuche, die Wirkmodule (3) mechanisch zu entfernen oder thermisch zu zerstören) aktivieren die zweite Schutzstufe der Diebstahlsicherung, die die Zerstörung aller mit Wirkmodulen (3) ausgerüsteten Baugruppen bewirkt.
Dadurch wird der Austausch aller derart gesicherten Baugruppen notwendig, so daß ein zielgerichteter Diebstahl wirtschaftlich nicht mehr lohnenswert ist.

Die Vorteile der Erfindung bestehen insbesondere darin, daß die permanente Wirkung aktivierter Wirkmodule (3) aufgrund ihrer Anordnung, Konstruktion und Wirkungsweise von professionellen Dieben nicht durch analytisches Vorgehen überwunden und eleminiert werden können. Da alle anderen Baugruppen der Diebstahlsicherung keinen Code enthalten, können diese Teile der Diebstahlsicherung (z. B. Eingabeeinheit (1)) ungesichert am zu schützenden Objekt angeordnet sein. Auch bei einer gewaltsamen Zerstörung oder Manipulation bleibt die Schutzwirkung erhalten, da alle vorhandenen Wirkmodule (3) im Zustand "AKTIVIERT" verbleiben.
Das Diebstahlsicherungssystem bietet die Möglichkeit, den organisierten Diebstahl, insbesondere von wertintensiven Objekten, wie Kraftfahrzeugen, wirksam zu bekämpfen.
Dadurch, daß eine Vermarktung gestohlener Fahrzeuge nur noch nach vorheriger Demontage der gesicherten Baugruppen möglich ist, entsteht ein signifikant steigender Bedarf an entsprechenden Original-Ersatzteilen. Da diese Teile in der Regel nur über autorisierte Filialen oder Werkstätten vertrieben werden, können damit auch Lieferverbindungen zu Autohehlern aufgedeckt werden.
Aus physiologischen Gründen und zur Präventation ist es vorteilhaft, alle mit einem derartigen Diebstahlsicherungssystem ausgerüsteten Fahrzeuge durch ein Signet oder ein Logo im Sinne eines Warenzeichens zu kennzeichnen, um bereits prophylaktisch vom Versuch eines Diebstahls abzuhalten.
Ein weiterer Vorteil des Diebstahlsicherungssystems besteht in der Möglichkeit, daß bei jedem Wechsel des Eigentümers eine Umcodierung vorgenommen werden kann. Dadurch wird ausgeschlossen, daß der bisherige Eigentümer im Besitz eines Reserve- oder Nachschlüssels ist, der es ihm später ermöglichen könnte, seinen früheren Besitz mit einem autorisierten Schlüssel wieder in Betrieb zu nehmen.
Diese Möglichkeit ist insbesondere von Bedeutung bei der Erstzulassung von Fahrzeugen, die in der Regel vom Hersteller zu Versandzwischenlagern und anschließend zu Fachhändlern gelangen.
So läßt sich durch ein Umcodieren nach der Übernahme des Fahrzeuges ausschließen, daß der frühere Besitzer Zugriff auf das Fahrzeug hat.

Dadurch können im Umkehrschluß Schadenersatzansprüche des Übernehmenden an den Übergebenden im Falle eines Diebstahls ausgeschlossen werden.

Die Erfindung ist nachfolgend anhand eines Ausführungsbeispiels näher beschrieben und in Zeichnungen dargestellt.

Es zeigen:
- Fig. 1:: eine Flußbildübersicht der Diebstahlsicherung
- Fig. 2a:: das Signalflußbild der Eingabeeinheit (1) in der Grundausführung
- Fig. 2b:: das Signalflußbild der Eingabeeinheit (1) in der erweiterten Ausführung
- Fig. 2c:: das Signalflußbild der Eingabeeinheit (1) in der Komplexausführung
- Fig. 3:: das Signalflußbild eines Wirkmoduls (3)
- Fig. 4:: ein Ventilmodul (3.a), angeordnet im Kraftstoffbehälter eines Fahrzeuges
- Fig. 5:: ein Ventilmodul mit einer Sollbruchmembran (3.b) in einem gesonderten Verbindungskanal zwischen Kühlkreislauf und Verbrennungsraum eines Verbrennungsmotors
- Fig. 6:: ein Druckmodul für Druckbehälter (3.c), das in der Nähe des Zylinderkopfes eines Verbrennungsmotors angeordnet ist
- Fig. 7:: ein Stiftmodul (3.d), das auf die Lenksäule eines Fahrzeuges wirkt
- Fig. 8:: ein Schaltermodul (3.e), das im Gehäuse eines Anlassers angeordnet ist
- Fig. 9:: einen Codeschlüssel mit darauf angeordnetem Magnetstreifen
Die vorgestellte Diebstahlsicherung dient zum Schutz eines Kraftfahrzeuges vor Diebstahl oder unbefugter Benutzung.

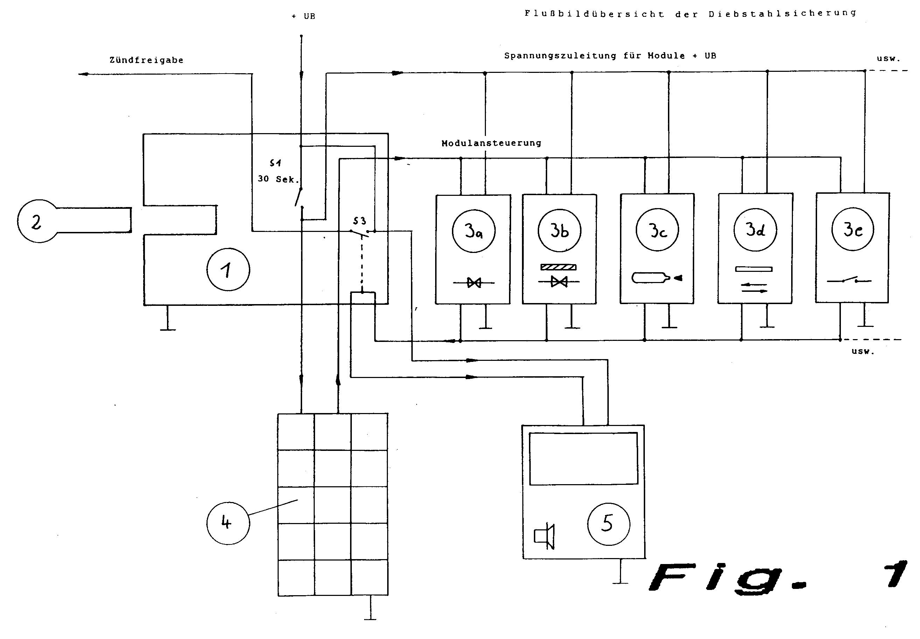

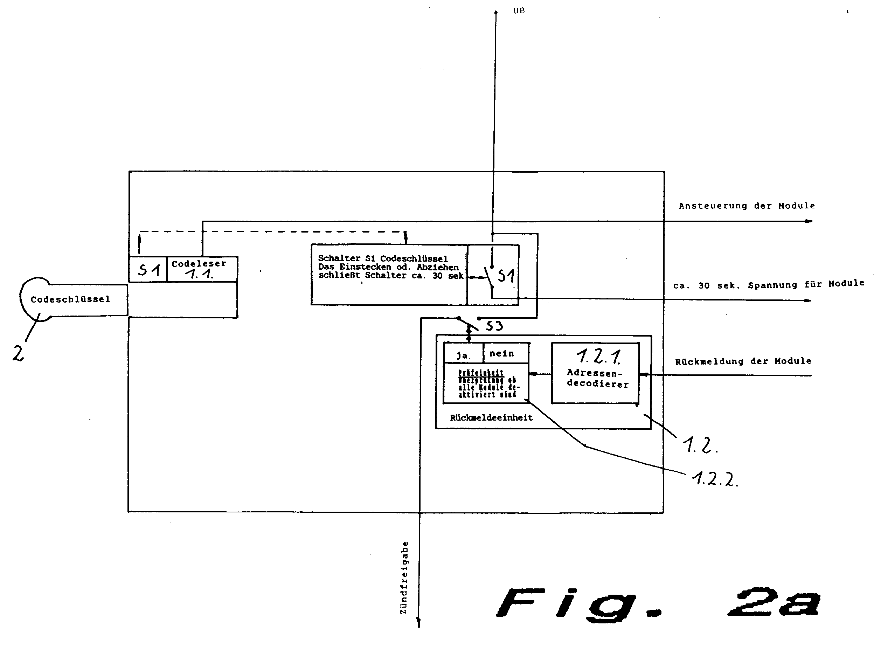

Das in Figur 1 dargestellte Signalflußschema zeigt die Eingabeeinheit (1), die durch Modulansteuerungsleitungen mit fünf verschiedenen Wirk.modulen (3) verbunden ist. In Gegenrichtung sind alle Wirkmodule (3) über eine Datenrückmeldeleitung mit der Eingabeeinheit (1) gekoppelt.
Über die Tasteneingabe (4) ist bei eingeführtem Codeschlüssel (2) und übereinstimmender Codierung auf dem Codeschlüssel (2) und im Codespeicher (3.4.) der Wirkmodule (3) eine Änderung des aktuellen Codes möglich.
Ein neben der Eingabeeinheit (1) angeordnetes Display (5) ermöglicht eine erleichterte Bedienerführung und erlaubt die visuelle Anzeige des jeweiligen Ist-Zustandes ("AKTIVIERT"/"DEAKTIVIERT") der Diebstahlsicherung.
Daneben werden über das Display (5) Fehlermeldungen, z. B. der Ausfall eines Wirkmoduls (3) oder das Ausbleiben eines Rückmeldesignals als Folge einer Störung an einer Signalflußleitung angezeigt.
Die Spannungszuführung zu den Wirkmodulen (3) verläuft über die Eingabeeinheit (1) und wird erst bei eingeführtem Codeschlüssel (2) freigegeben.

Beim vollständigen Einführen des Codeschlüssels (2) in den Codeleser (1.1.) der Eingabeeinheit (1) wird der Code gelesen und an alle Wirkmodule (3) in den gesicherten Baugruppen und Aggregaten weitergeleitet. Bei Empfang eines korrekten Codesignales wird jedes Wirkmodul (3) deaktiviert, das heißt, es wird der Zustand eingestellt, in dem das Fahrzeug fahrbereit ist. Dieser Zustand bleibt erhalten, solange sich der Codeschlüssel (2) im Codeleser (1.1.) der Eingabeeinheit (1) befindet.

Beim Herausführen des Codeschlüssels (2) kommt es zu einem erneuten Lesevorgang. Da kein Code mehr gelesen werden kann, erkennen die Wirkmodule (3), daß der Code nicht mehr vorhanden oder falsch ist und aktivieren die gesicherten Aggregate und Baugruppen. Dabei wird jedes einzelne, mit Wirkmodulen (3) ausgerüstete Aggregat blockiert, arretiert oder für die Zerstörung freigegeben, falls trotz aktivierter Diebstahlsicherung das Fahrzeug in Betrieb genommen werden sollte.
Soll das Fahrzeug von einem gesicherten in einen ungesicherten, das heißt fahrbereiten Zustand überführt werden, wird der Codeschlüssel (2) erneut eingeführt und dabei der Code gelesen und an die Wirkmodule (3) weitergeleitet. Die Wirkmodule (3) deaktivieren daraufhin ihre Schutzfunktion und geben jeweils eine mit einem Adressensignal versehene Rückmeldung codiert an den Auswerteteil der Eingabeeinheit (1).
Befinden sich alle Wirkmodule (3) im deaktivierten Zustand, wird die Betriebsbereitschatr auf dem Display (5) angezeigt und akustisch signalisiert. Gleichzeitig mit der Bereitschaftsmeldung erfolgt die Freigabe der Zündanlage.
Bei Außerbetriebnahme des Fahrzeuges durch Entfernen des Codeschlüssels aus der Eingabeeinheit werden automatisch alle Wirkmodule (3) in den gesicherten (aktivierten) Zustand überführt. Wird anschließend der Codeschlüssel (2) wieder in die Eingabeeinheit (1) eingeführt, entsichern alle Wirkmodule (3) die betreffenden Baugruppen und Aggregate (deaktivierter Zustand).

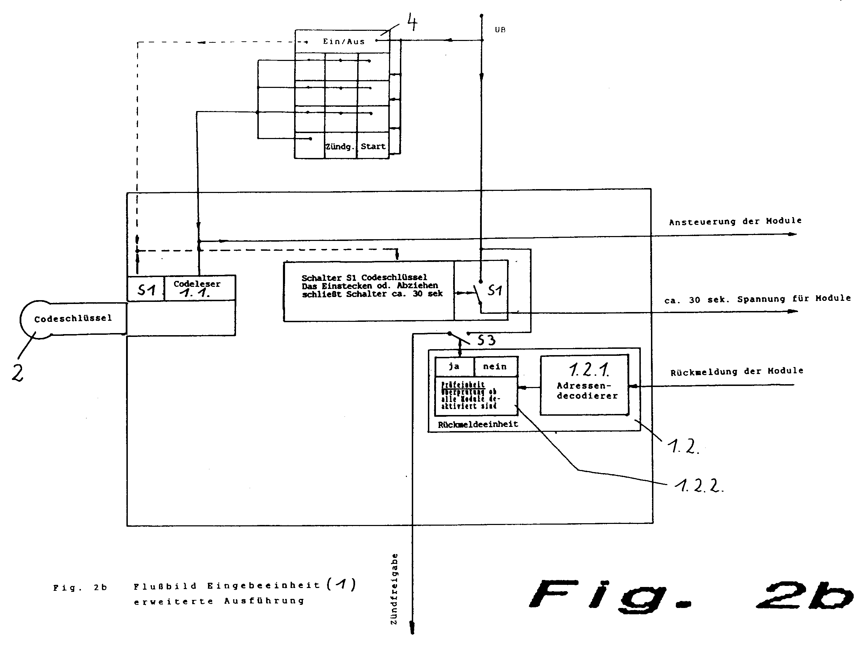

In den Figuren 2a ... 2c ist die Wirkstruktur der Eingabeeinheit (1) näher dargestellt.

Dabei zeigt Figur 2a die Grundausführung der Eingabeeinheit (1). Figur 2b stellt eine erweiterte Ausführungsform der Grundausführung nach Fig. 2a dar, in der mit einer zusätzlichen Tasteneingabe (4) eine Änderung der Codierung am zu sichernden Objekt möglich ist.

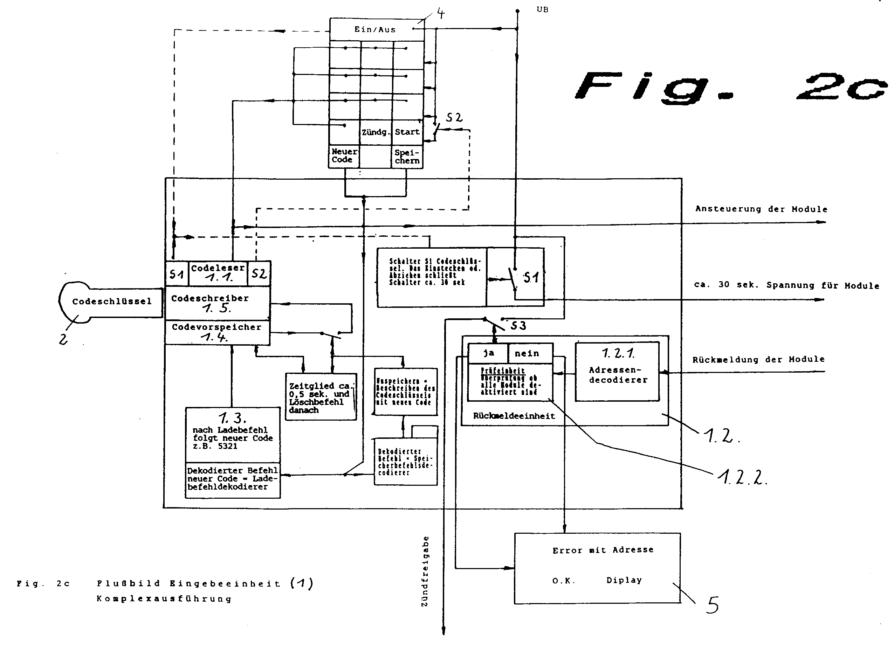

Figur 2c zeigt eine gegenüber Fig. 2b weiter aufgerüstete Komplexausführung mit zusätzlichem Display (5) zur optischen und/oder akustischen Anzeige des Ist-Zustandes der Diebstahlsicherung oder zur Fehleranzeige.

Die Eingabeeinheit (1) hat die Aufgabe, den Code aus dem Codeschlüssel (2) zu lesen und über die Ansteuerungsleitung (3.7.) den Wirkmodulen (3) zuzuleiten. Weiterhin überprüft sie die Rückmeldungen der Wirkmodule (3) über deren aktuellen Zustand ("AKTIVIERT" oder "DEAKTIVIERT"). Daneben ermöglicht die Eingabeeinheit (1) im Zusammenwirken mit der Tasteneingabe (4) eine beliebige Änderung des Codes auf dem Codeschlüssel (2) und in den Wirkmodulen (3).

Eine Änderung des Codes verläuft dabei wie folgt:
Der Codeschlüssel (2) wird in den Codeleser (1.1.) der Eingabeeinheit (1) eingeführt. In der Tasteneingabe (4) wird die Funktionstaste "NEUER CODE" betätigt.
Danach wird der neue Code mit den Zifferntasten eingetippt und schließlich durch Drücken der Taste _{"}Speichern" im Codespeicher (3.4.) der Wirkmodule (3) gespeichert sowie der Codeschlüssel (2) neu beschrieben. Dabei sind die Befehle _{"}Neuer Code" und _{"}Umspeichern" für den Fall gesperrt, daß sich kein Codeschlüssel (2) im Codeleser (1.1.) der Eingabeeinheit (1) befindet (verantwortlich S2). Beide Befehle ändern gleichzeitig den Code auf dem Codeschlüssel (2) und im Codespeicher (3.4.) des Wirkmoduls (3). Somit ist ausgeschlossen, daß nur der Code im Codespeicher (3.4.) des Wirkmoduls (3) geändert wird.

Beim Ändern des Codes läuft folgender Vorgang ab: Der Codeschlüssel (2) schaltet über S1 Spannung an die Module. Ebenso ermöglicht der Codeschlüssel über S2 die Betätigung der Tasten _{"}Neuer Code" und _{"}Speichern" der Tasteneingabe. Der vom Codeleser (1.1.) gelesene Code wird über die Ansteuerungsleitung (3.7.) zu den Wirkmodulen (3) gegeben. Fällt in den Wirkmodulen (3) der Vergleich gelesener Code mit Code im Codespeicher (3.4.) positiv aus (JA), sind Ladebefehlsdecodierer (3.9.) und Speicherbefehlsdecodierer (3.10.) ansprechbar. Somit ist eine Umcodierung nur bei vorher richtigem Code möglich. Das Drücken der Taste _{"}Neuer Code" in der Tasteneingabe (4) wird vom Ladebefehlsdecodierer (3.9.) in den Wirkmodulen (3) über einen Adressencode erkannt und der Ladebefehlsdecodierer (3.9.) aktiviert den Codevorspeicher (3.3.) hinsichtlich der Aufnahme des neuen Codes.

Durch Betätigung der Zifferntasten an der Tasteneingabe (4) wird nunmehr der neue Code in den Codevorspeicher (3.3.) der Wirkmodule (3) geladen. Wird jetzt die Taste _{"}Speichern" gedrückt, so kann der neu eingegebene Code aus dem Codevorspeicher (3.3.) der Wirkmodule (3) im Codespeicher (3.4.) der Wirkmodule (3) abgespeichert werden.

Parallel zu den Vorgängen in den Wirkmodulen (3) läuft in der Eingabeeinheit (1) ähnliches ab:
Das Drücken der Taste _{"}Neuer Code" in der Tasteneingabe (4) wird vom Ladebefehlsdecodierer (1.3.) in der Eingabeeinheit (1) über einen Adressencode erkannt und der Ladebefehlsdecodierer (1.3.) aktiviert den Codevorspeicher (1.4.) hinsichtlich der Aufnahme des neuen Codes. Durch das Drücken der Zifferntasten an der Tasteneingabe (4) wird nunmehr der neue Code in den Codevorspeicher (1.4.) der Eingabeeinheit (1) geladen. Wird jetzt die Taste _{"}Speichern" gedrückt, so kann der neu eingegebene Code aus dem Codevorspeicher (1.4.) der Eingabeeinheit (1) mit dem Codeschreiber (1.5.) auf den Codeschlüssel (2) geschrieben werden.
Anschließend wird der Codevorspeicher (1.5.) gelöscht, so daß kein Code in der Eingabeeinheit (1) verbleibt und damit ein Entschlüsseln des aktuellen Codes aus der Eingabeeinheit (1) unmöglich wird.

Sowohl beim Einführen als auch beim Entnehmen des Code- schlüssels (2) werden die Wirkmodule (3) für 30 Sekunden mit Spannung versorgt. In dieser Zeit überprüfen die Codespeicher (3.4.) der Wirkmodule (3) die Übereinstimmung des Schlüsselcodes mit dem aktuellen Code im Codespeicher (3.4.). In Abhängigkeit vom Ergebnis wird die Diebstahlsicherung aktiviert (Code falsch oder nicht vorhanden) oder deaktiviert (Code richtig). Um nach dem Deaktivieren des Sicherungssystems mögliche fehlerhafte Reaktionen der Wirkmodule (3) auszuschließen, werden die Wirkmodule (3) von der Spannungsversorgung getrennt.

Die Funktion der Wirkmodule (3) ist in Figur 3 näher dargestellt.

Über die Ansteuerungsleitung (3.7.) kommt das Codesignal in die erste Sperrschaltung (3.1.1.). Durch diese Richtungssperreinheit wird realisiert, daß Signale nur in das Wirkmodul (3) eingelesen, nicht aber ausgegeben werden. Damit wird verhindert, daß der Codespeicher (3.4.) des Wirkmoduls (3) von außen lesbar ist.
Die zweite Sperrschaltung (3.1.2.) wird von einer Zeitsperreinheit angesteuert, die aus vier Zeitgliedern besteht. Diese Zeitglieder sperren die Ansteuerungsleitung (3.7.) in den Wirkmodulen (3) nach einem fehlerhaften Bedienungsvorgang (falscher Codeschlüssel, falscher Eingabecode) gegenüber einem weiteren Versuch, Codeinformationen mittels Codeschlüssel (2) oder über die Tasteneingabe (4) einzulesen.
Die Zeitsperreinheit bewirkt, daß ein zweiter Codelesevorgang erst nach einer Minute, ein dritter Versuch nach zwei Minuten, ein vierter Versuch nach vier Minuten und ein fünfter Versuch erst nach 48 Stunden vorgenommen werden kann.

Nach der zweiten Sperrschaltung (3.1.2.) gelangt das Codesignal in die Vergleichseinheit (3.2.), die das Signal mit dem Code im Codespeicher (3.4.) vergleicht. Bei Übereinstimmung werden über den Schaltverstärker (3.6.) in der Wirkbaugruppe (3a) ... (3e) der Wirkmodule (3) Servomotoren mit Getriebe angesteuert und dadurch die Wirkmodule (3) deaktiviert.
Ist der Zustand "deaktiviert" erreicht, geben die Wirkmodule (3) über die Rückmeldeleitung (3.8.) mit einem Adressencode des jeweiligen Wirkmoduls (3) den Zustand "deaktiviert" an die Eingabeeinheit (1) weiter.
Stimmen Codesignal und Code im Codespeicher (3.4.) des Wirkmoduls (3) nicht überein, werden über ein weiteres Zeitglied (3.5.) nach 30 Sekunden über die Schaltverstärker (3.6.) in den Wirkmodulen (3) die Servomotoren angesteuert und dadurch die Diebstahlsicherung aktiviert.

Eine Änderung der Codierung in den Wirkmodulen (3) (z. B. bei Wechsel des Eigentümers, bei Werkstattaufenthalt etc.) setzt zunächst Übereinstimmung des über die Tasteneingabe (4) eingegebenen oder über den Code-schlüssel (2) eingelesenen Codes mit dem Code in den Codespeichern (3.4.) der Wirkmodule (3) voraus. Ist diese Bedingung erfüllt, sind der Ladebefehl "NEUER CODE" und der Speicherbefehl "SPEICHERN" realisierbar.

Die Möglichkeiten einer regelmäßigen Änderung der Codierung bei Wechsel des Besitzers sind nachfolgend beispielhaft dargestellt:
Alle Wirkmodule (3) werden vom Zulieferer mit einem Festcode (0000) produziert und beim Hersteller der einzelnen Aggregate (z. B. Lichtmaschine, Zündanlage, Einspritzpumpe etc.) in die Aggregategehäuse eingebaut.

Beim Fahrzeughersteller wird unmittelbar nach Fertigstellung des kompletten Fahrzeuges ein neuer, individueller Code über den bisherigen Festcode (0000) geschrieben. Damit wird der einzige, auch Dritten bekannte Code (0000) außer Kraft gesetzt.
Von diesem Augenblick an ist für alle nachfolgend berechtigten Besitzer die Sicherheit des Diebstahlschutzes gegeben, solange sie den Zahlencode in codierter Form als Codeschlüssel besitzen oder Kenntnis von der geheimen Codenummer haben.

Eine exemplarische Neucodierung kann wie folgt vorgenommem werden:
Herstellerseitig wird das Modul mit der neutralen Code-nummer (0000) codiert. Der Fahrzeughersteller überschreibt diese Codierung mit einem geheimen, internen Code, z. B. (4321). Der Fahrzeughändler, der diesen Personenkraftwagen übernimmt, sichert sich gegenüber Dritten durch ein erneutes Überschreiben der Codierung, z. B. in der Form (6789), ab.
Der Kunde als Endverbraucher hat seinerseits die Möglichkeit, die Codierung erneut zu ändern und damit einen individuellen Schutz gegen Benutzung zu schaffen, z.B. durch Überschreiben des alten Codes mit der neuen Code-nummer (4711).

Durch die einfache Codierbarkeit des Codeschlüssels über die Eingabetastatur (4) ist ein berechtigter Benutzer in der Lage, bei Verlust des Codeschlüssels (2) sich selbsttätig Ersatz zu schaffen, indem ein Codeschlüssel-"Rohling" in den Codeleser (1.1.) der Eingabeeinheit (1) eingelegt und über die Tasteneingabe (4) zunächst der bisherige, alte Code eingegeben wird. Nachfolgend kann der Codeschlüssel-"Rohling" mit einem neuen Code überschrieben werden.

Eine Inbetriebnahme des Fahrzeuges ohne Codeschlüssel ist bei den in den Figuren 2b und 2c dargestellten Varianten wie folgt möglich:
Mit der Taste Ein/Aus der Tasteneingabe (4) wird der Schalter S1 ersetzt und der entsprechende Code über die Zifferntasten eingegeben. In den Wirkmodulen (3) wird der ankommende Code verglichen und bei Übereinstimmung erfolgt die Deaktivierung der Wirkmodule (3). Anschließend erfolgt die Rückmeldung über den Adressendecodierer (1.2.1.). Nach Überprüfung der Deaktivierung aller Wirkmodule (3) erfolgt die Zündfreigabe. Das Einschalten der Zündung und der Start wird über die dafür vorhandenen Tasten der Tasteneingabe (4) möglich.

Falls der berechtigte Benutzer die geheime Codierung vergessen haben sollte, kann das zu sichernde Objekt nach wie vor mittels Codeschlüssel (2) geöffnet und benutzt werden. Allerdings ist es angezeigt, mit dem Codeschlüssel kurzfristig eine dafür autorisierte Fachwerkstatt aufzusuchen, um den Codeinhalt zu lesen und seinen Code zu erfragen.
Gleiches gilt für den Fall, daß eine ungewollte Umcodierung erfolgte (z.B. durch versehentliches Berühren der Tasteneingabe im Zustand "NEUER CODE"/"SPEICHERN"), ohne daß die neue Codierung bekannt ist.

Bei gleichzeitigem Verlust des Codeschlüssels (2) und des Wissens um die zuletzt gespeicherte, geheime Codenummer kann das gesicherte Fahrzeug nie mehr in Betrieb genommen werden.

Bei notwendigen Reparaturen, z. B. bei Ausfall einer gesicherten, funktionswichtigen Baugruppe oder bei einem Defekt des darin befindlichen Wirkmoduls (3) sind vorab alle Wirkmodule (3) über die Tastatureingabe (4) auf den Standardcode (0000) zu formieren. Nach Wechsel des defekten Aggregates erfolgt eine Neucodierung des bisherigen Nutzercodes oder eines beliebig anderen Zahlencodes.
Sollte es versäumt worden sein, die Wirkmodule (3) vor einer Instandsetzung oder einem Baugruppentausch in den Zustand (0000) zu bringen, so wird der bisherige Code eingegeben und mit der Codierung (0000) überschrieben. Erst nach der Blockadezeit von einer Minute (bedingt durch die Zeitsperrschaltung (3.1.2.)) kann der bisher verwendete oder auch jeder beliebige andere Code auf die Codespeicher (3.4.) der Wirkmodule (3) und den Codeschlüssel (2) geschrieben werden.

Die Wirkmodule (3) sind bei dem zu sichernden Fahrzeug in den funktionswichtigen und wertintensiven Baugruppen Motor, Getriebe/ Kupplung, Anlasser` Zündung, Lenkung, Tank und Türen integriert. Damit wird der Diebstahl dieses Fahrzeuges wirtschaftlich unrentabel, da ein vollständiger Austausch aller gesicherten Baugruppen Kosten verursacht, die etwa dem Neuwert des Fahrzeuges entsprechen.

Das Ventilmodul (3a) kann zur redundanten Sicherung an verschiedenen Punkten im Antriebsaggregat angeordnet sein, um im Falle einer unerlaubten Benutzung oder eines versuchten Diebstahls die Funktions- bzw. Betriebsfähigkeit des Motors herabzusetzen bzw. den gezielten Systemausfall herbeizuführen.
So ist ein Ventilmodul (3a) innerhalb des Ölkreislaufes der Ölförderpumpe unmittelbar nachgeordnet. Im Falle einer unbefugten Benutzung unterbricht das aktivierte Ventilmodul (3a) den Ölkreislauf im Motor und führt damit innerhalb kurzer Zeit eine thermische Überlastung und nachfolgend die mechanischen Zerstörung funktionswichtiger Motorenteile (Kurbelwelle, Lager, Kolben, Zylinder) herbei.
Ein weiteres Ventilmodul (3a) ist im Kühlmittelkreislauf integriert und unterbricht im aktivierten Zustand bei Inbetriebnahme des Fahrzeuges den Kühlmittelkreislauf im Motorgehäuse.

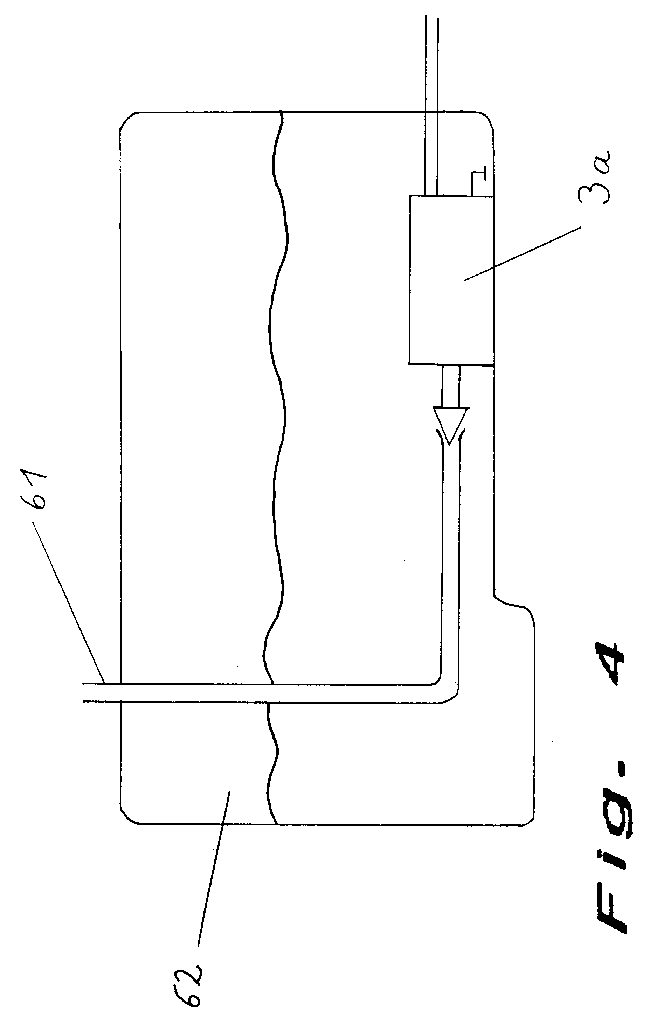

In Figur 4 ist ein Ventilmodul (3a) bodenseitig im Kraftstofftank angeordnet und schließt im aktivierten Zustand über einen Dichtkegel die Ansaugöffnung der Kraftstoffsaugleitung.

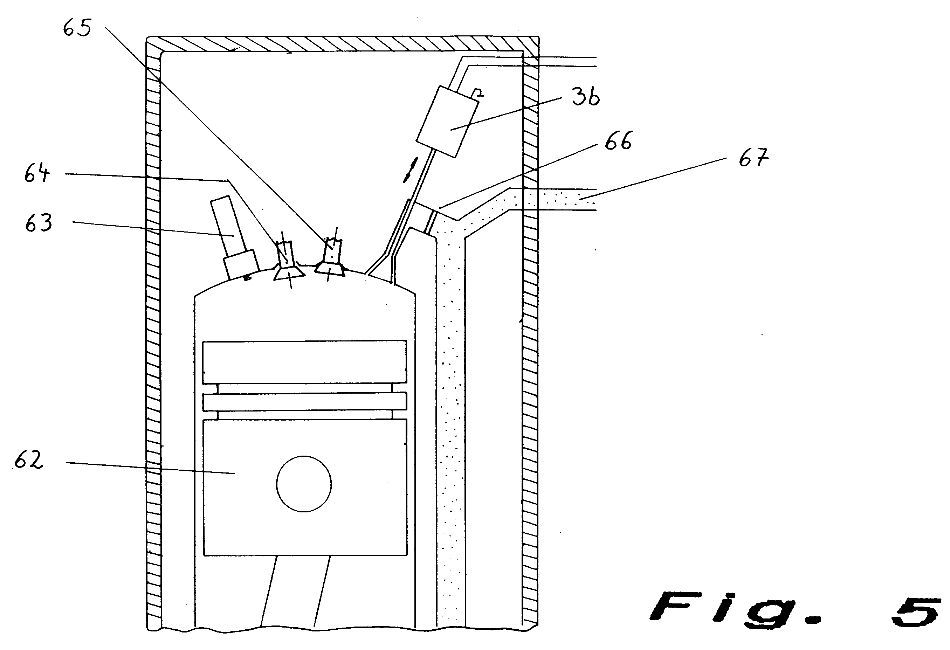

In Figur 5 ist ein Ventilmodul mit einer Sollbruchmembran (3b) in einem gesonderten Verbindungskanal angeordnet, durch den der Verbrennungsraum im Motor mit dem Kühlmittelkreislauf in Verbindung steht. Die gasdichte Trennung des Verbrennungsraumes vom Kühlmittelkreislaufsystem erfolgt durch die Sollbruchmembran (66), vor der das Ventilmodul (3b) angeordnet ist. Kommt es im aktivierten Zustand des Ventilmoduls (3b) (geöffnetes Ventil) zu einer unerlaubten Benutzungshandlung, so wird durch den Druck im Verbrennungsraum die als Sollbruchstelle wirkende Membran zerstört und es kommt zum Kompressionsausfall im Verbrennungsraum. Außerdem kann Kühlmittel in den Verbrennungsraum gelangen.

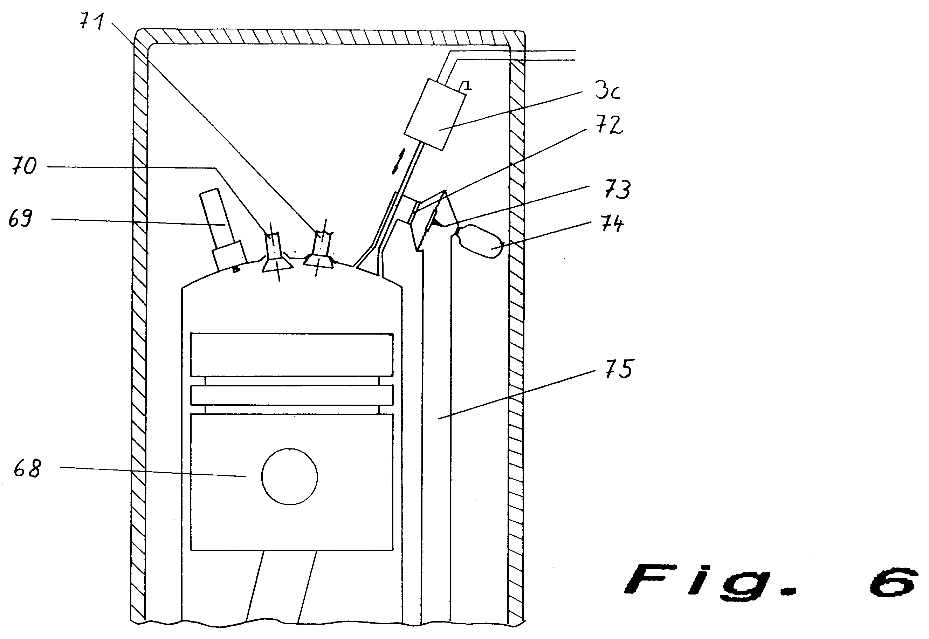

In Figur 6 ist ein Druckmodul (3c) mit Sollbruchmembran und Öffnungsmembran für Druckbehälter unmittelbar im Motorengehäuse angeordnet. Bei aktiviertem Druckmodul (3c) (Ventil geöffnet) zerstört der Druck des Verbrennungsraumes im Motor die Sollbruchmembran (72) und preßt die Öffnungsmembran (73) mit Dorn in die mit einer Abdichtmembran verschlossene Auslaßöffnung eines Druckbehälters (74). Dadurch gelangt Einkomponenten-Polyurethanschaum über den Auslaßkanal (75) in das Kurbelgehäuse. Dort führt die ablaufende chemische Reaktion zu einem Benetzen und Verkleben aller Bauteile, bis es nach Ablauf der Reaktion in Folge der Festschaumbildung zu einer vollständigen Verfestigung der Bauteile kommt. Die solcherart verbundenen Bauteile sind nur durch vollständige Motordemontage zu entfernen.

Alle Fahrzeugtüren, die Motorhaube und der Deckel des Kofferraumes sind durch Sperrstiftmodule (3d) gesichert, die mit Epoxidharzkleber auf der Innenseite der Beblechung unlösbar befestigt sind. Im aktivierten Zustand der Stiftmodule (3d) wird damit eine zusätzliche Verriegelung der betreffenden Baugruppen gegenüber dem Fahrzeugrahmen bzw. der Karosserie realisiert.

Dabei muß aus Sicherheitsgründen beachtet werden, daß die Türen jederzeit von innen geöffnet werden können, solange die Türen nicht von außen abgeschlossen worden sind.

Hierfür gibt es mindestens zwei Lösungen:

### 1. Die Türen werden mit herkömmlichen Schließsystemen (z. B. Doppelverriegelung) gesichert.

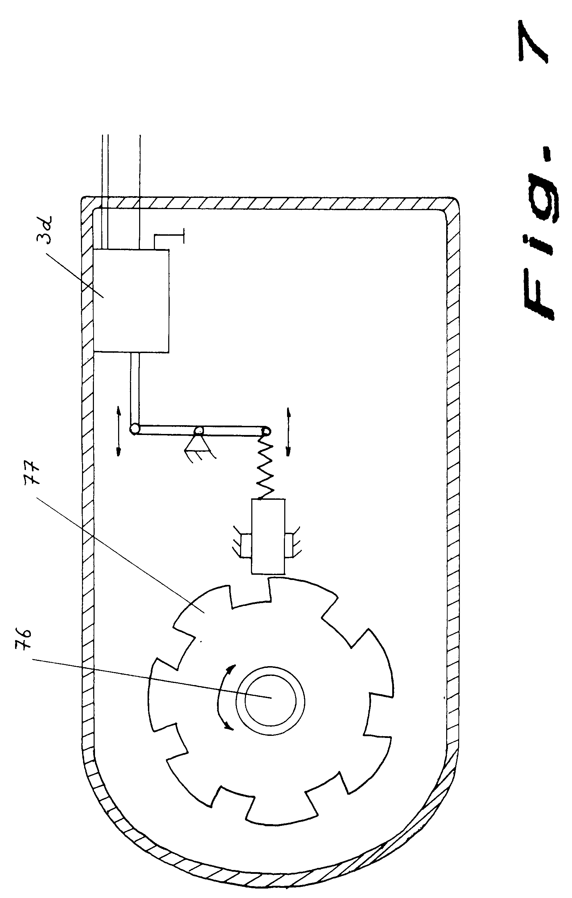

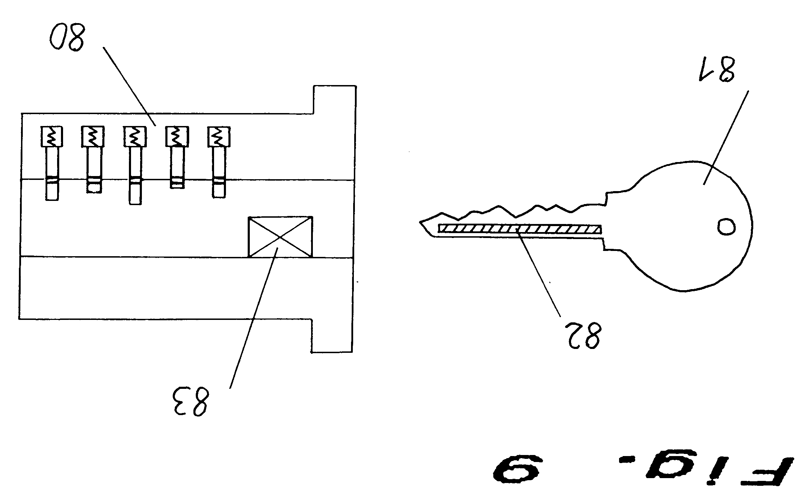

In einer alternativen Ausgestaltung ist der mechanische Schlüssel (81) gleichzeitig Codeschlüssel (2) (er trägt außer den mechanischen Schließelementen zusätzlich den Magnetstreifen (82), auf dem der Code gespeichert ist; vgl. Fig. 9).
2. Die Sicherung der Fahrzeugtüren erfolgt mittels Stiftmodulen (3d), die von separaten Leseeinheiten (an den Türschlössern) mit Spannung und Code versorgt werden. Somit können die Türen nur am Türschloß mit dem Codeschlüssel (2) verriegelt bzw. entriegelt werden.
Dazu ist eine Reihenschaltung aller Türkontakte (ähnlich der Schaltung für die Innenbeleuchtung am Fahrzeug) notwendig, damit die Stiftmodule (3d) nicht in den gesicherten Zustand fahren können, solange eine Tür noch geöffnet ist. Dadurch wird eine Beschädigung der Stiftmodule (3d) beim Schließen der Türen verhindert. Zusätzlich ist eine Kopplungsvorrichtung zur gemeinsamen Umcodierung aller Wirkmodule (3) am Fahrzeug vorhanden.
Die Sicherung der Lenkung erfolgt gemäß Figur 7 unter Verwendung eines Stiftmoduls (3d), das sich in einer gekapselten Glocke seitlich neben der Lenksäule (76) befindet. Im aktivierten Zustand greift der ausgefahrene Sperrstift formschlüssig in eine Verzahnung für die Stiftaufnahme (77) an der Lenksäule (76) ein und verhindert somit jegliche Lenkbewegungen.
Zusätzlich kann das Lenkungssystem durch ein Stiftmodul (3d) gesichert werden, das unmittelbar auf die hydraulische Lenkhilfe wirkt und diese blockiert.
Die Sicherung der Kupplungseinheit erfolgt gleichfalls durch ein Siftmodul (3d), das sich innerhalb des Kupplungs-Getriebegehäuses befindet und ein Auskuppeln der Kupplungsscheiben verhindert.

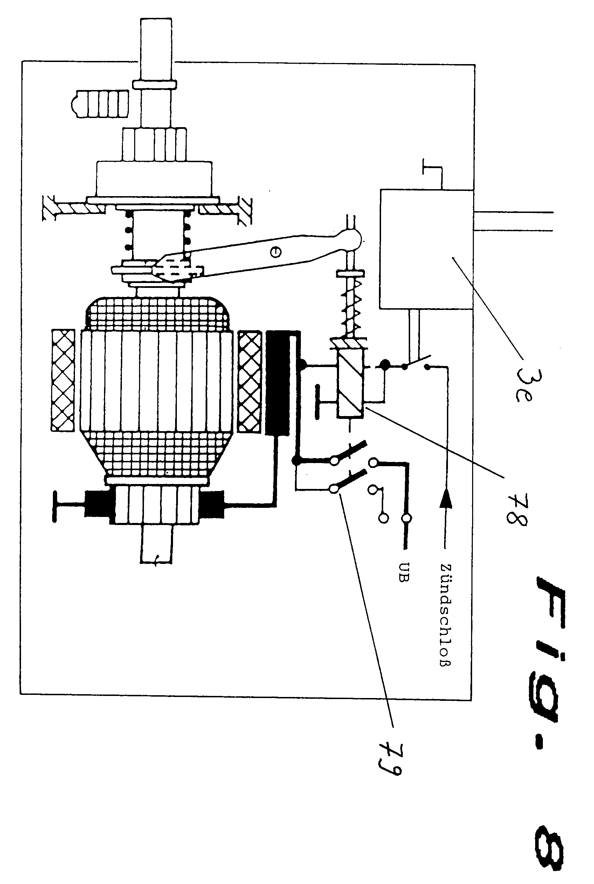

Die Lichtmaschine ist durch ein Schaltermodul (3e gesichert, das innerhalb des vernieteten Lichtmaschinengehäuses unlösbar mit der Gehäuseinnenwandung verbunden ist. In gleicher Weise ist der Anlasser (Figur 8) durch ein weiteres Schaltermodul (3e) gesichert, daß im Gehäuse untergebracht ist und im aktivierten Zustand die Spannungszufuhr zum Zugmagneten (78) unterbricht. Ein drittes Schaltermodul (3e) ist im Steuerteil der Zündanlage eingegossen und unterbricht im aktivierten Zustand die Zündung.

### Bezugszeichenliste

- Fig 4:
- 3a: Ventilmodul im Tank eines Fahrzeuges
- 60: Tank
- 61: Kraftstoffsaugleitung
- Fig 5:
- 3b: Ventilmodul mit Sollbruchmembran im Motor
- 62: Kolben
- 63: Zündkerze
- 64: Einlaßventil
- 65: Auslaßventil
- 66: Sollbruchmembran
- 67: Kühlmittelkreislauf
- Fig 6:
- 3c: Druckmodul
- 68: Kolben
- 69: Zündkerze
- 70: Einlaßventil
- 71: Auslaßventil
- 72: Sollbruchmembran
- 73: Öffnungsmembran mit Dorn
- 74: Druckbehälter
- 75: Verbindung zum Kurbelgehäuse
- Fig 7:
- 3d: Stiftmodul an der Lenksäule
- 76: Lenksäule
- 77: Verzahnung für Stiftaufnahme
- Fig 8:
- 3e: Schaltermodul
- 78: Zugmagnet
- 79: Schalter für Spannung zum Anlasser
- Fig 9: Zünd- oder Türschloß
- 80: mechanische Abtastung
- 81: Schlüssel
- 82: Magnetstreifen
- 83: Codeleser

## Patentansprüche

1. Diebstahlsicherung zum Schutz von Fahrzeugen vor widerrechtlicher Entnahme oder unbefugter Benutzung,
- mit einem Codeschlüssel und einer Lesevorrichtung zur Freigabe des Betriebes des Fahrzeuges,
- mit mindestens einem Wirkmodul, das jeweils einen Speicher zur Speicherung eines Codes und eine Vergleichseinrichtung zum Vergleich des vom Codeschlüssel gelesenen Codes mit dem gespeicherten Code aufweist, wobei die Freigabe des Betriebes bei Übereinstimmung der Codes erfolgt,
dadurch gekennzeichnet,
- daß das Wirkmodul (3) einer zu schützenden Baugruppe des Fahrzeuges zugeordnet ist,
- daß das Wirkmodul (3) bei fehlender Übereinstimmung der Codes eine Blockierung der Funktion oder eine Zerstörung der Baugruppe bewirkt,
- daß das Wirkmodul (3) mit der zugeordneten Baugruppe in einer von außen unzugänglichen Weise zusammengeschlossen ist, so daß ein Zugriff auf das Wirkmodul (3) von außen nur unter Zerstörung der Baugruppe erfolgen kann,
- daß eine an alle Wirkmodule (3) angeschlossene Rückmeldeeinheit (1.2.) vorgesehen ist, die an einem Display (5) anzeigt, ob jede der geschützten Baugruppen funktionsfähig ist und nur im letzterem Fall den Betrieb des Fahrzeuges erlaubt, und
- daß eine Tasteneingabe (4) vorgesehen ist, mit deren Hilfe ein neuer Code in den Codeschlüssel (2) sowie in den Speicher des Wirkmodules (3) einschreibbar und am Display (5) anzeigbar ist.

2. Diebstahlsicherung nach Anspruch 1,
dadurch gekennzeichnet,
daß sämtliche zur Kommunikation zwischen Codeschlüssel (2), Wirkmodulen (3) und Rückmeldeeinheit (1.2.) notwendigen Informationen verschlüsselt sind.

3. Diebstahlsicherung nach Anspruch 1,
dadurch gekennzeichnet,
daß die Wirkbaugruppe (3a) ein Ventilmodul ist, welches das Öffnen oder Schließen einer Durchlaßöffnung am zu sichernden Objekt durch ein mechanisch, pneumatisch, hydraulisch oder elektrisch betätigtes Ventil realisiert.

4. Diebstahlsicherung nach Anspruch 1,
dadurch gekennzeichnet,
daß die Wirkbaugruppe (3b) ein Ventilmodul mit Sollbruchmembran ist, welches das Eindringen eines flüssigen oder gasförmigen Mediums in das zu sichernde Objekt bewirkt.

5. Diebstahlsicherung nach Anspruch 1,
dadurch gekennzeichnet,
daß die Wirkbaugruppe (3c) ein Druckmodul mit Sollbruchmembran (72) ist, welches über eine Öffnungsmembran mit Dorn (73) einen Druckbehälter (74) öffnet, aus dem ein Festschaum in das Kurbelgehäuse des Motors eindringt.

6. Diebstahlsicherung nach Anspruch 1,
dadurch gekennzeichnet,
daß die Wirkbaugruppe (3d) ein Stiftmodul ist, bei dem ein stiftförmiges Wirkelement durch einen Elektromagneten oder einen Servomotor translatorisch bewegt wird, um Funktionen zu blockieren.

7. Diebstahlsicherung nach Anspruch 1,
dadurch gekennzeichnet,
daß die Wirkbaugruppe (3e) ein Schaltermodul ist, bei dem ein elektromechanischer Schalter das Öffnen oder Schließen eines elektrischen Kontaktes bewirkt, um Funktionen zu blockieren.

8. Diebstahlsicherung nach Anspruch 1,
dadurch gekennzeichnet,
daß das Wirkmodul (3) mit einer inneren Wandung der Baugruppe durch Umgießen mit Epoxidharz, mittels Schweißverbindung, durch Niet- oder Schraubverbindung unlösbar oder schwer lösbar verbunden ist.
